# FASCICULE DE BREVET EUROPEEN

(11) **EP 1 425 234 B1**
(45) Date de publication et mention de la délivrance du brevet: **08.11.2006**
(21) Numéro de dépôt: 02794807.4
(22) Date de dépôt: 12.08.2002
(51) Int. Cl.: B65D 81/34, A23L 3/365

(54) **DISPOSITIF POUR LA DECONGELATION D'AU MOINS UN SUSHI OU ALIMENT SIMILAIRE A L'AIDE DE MICRO-ONDES**
VORRICHTUNG ZUM AUFTAUEN MINDESTENS EINES STÜCKS SUSHI ODER ÄHNLICHEN LEBENSMITTELS UNTER VERWENDUNG VON MIKROWELLEN
DEVICE FOR DEFROSTING AT LEAST ONE PIECE OF SUSHI OR SIMILAR FOOD PRODUCT USING MICROWAVES

(30) Priorité: 13.08.2001 FR 0110773; 13.05.2002 FR 0205862
(43) Date de publication de la demande: 09.06.2004
(73) Titulaire: Marco Polo Foods, F-93120 La Courneuve (FR)
(72) Inventeur: HALIMI, Jean-Charles, F-75005 Paris (FR); DU REPAIRE, Guilhem, F-75016 Paris (FR)
(74) Mandataire: Breese, Pierre
(86) Numéro de dépôt international: PCT/FR2002/002857
(87) Numéro de publication internationale: WO 2003/016171

(56) Documents cités:
- PATENT ABSTRACTS OF JAPAN vol. 018, no. 678 (C-1290), 20 décembre 1994 (1994-12-20) & JP 06 269253 A (SHIGEMORI AKITA), 27 septembre 1994 (1994-09-27) cité dans la demande
- PATENT ABSTRACTS OF JAPAN vol. 1997, no. 10, 31 octobre 1997 (1997-10-31) & JP 09 149768 A (DAISOU:KK), 10 juin 1997 (1997-06-10)
- PATENT ABSTRACTS OF JAPAN vol. 1999, no. 14, 22 décembre 1999 (1999-12-22) & JP 11 262447 A (SAN HARMONY:KK), 28 septembre 1999 (1999-09-28)
- PATENT ABSTRACTS OF JAPAN vol. 2000, no. 01, 31 janvier 2000 (2000-01-31) & JP 11 290206 A (FUUDEKKUSU JAPAN:KK), 26 octobre 1999 (1999-10-26)

## Description

La présente invention se rapporte au domaine de la décongélation des sushi.

La présente invention se rapporte plus particulièrement à un dispositif pour la décongélation à l'aide d'un four à micro-ondes d'au moins un sushi ou aliment similaire, du type constitué d'un élément principal, destiné à être servi tiède, comme par exemple de riz ou du pain, et d'au moins un élément d'accompagnement destiné à être servi froid, ledit dispositif se présentant sous la forme d'un emballage présentant au moins un fond, des parois latérales et une paroi supérieure, ledit fond présentant sur sa surface intérieure une couche réflective de micro-ondes.

Il existe différentes familles de sushi :
- Nigiri sushi : boule de riz préparée (vinaigre, sucre, sel) surmontée d'une fine tranche de poisson cru ou de légume ;
- Maki sushi : rouleau de riz préparé entouré d'une algue séchée et fourré d'un morceau de poisson cru ou de légume ;
- Guncan : boule de riz préparée, entourée d'une algue séchée et fourrée de légume, d'oeufs de poisson ou d'une préparation à base de légume ou de poisson.

Tous les sushi comportent donc du riz ainsi qu'au moins un élément d'accompagnement.

Traditionnellement, le sushi est assemblé juste avant consommation, en utilisant du riz tiède, entre 20°C et 30°C, moelleux et un ou plusieurs éléments d'accompagnement frais, c'est-à-dire à une température inférieure à 20°C.

Il existe également des aliments qui peuvent se présenter d'une manière générale comme les sushi tels que présentés ci-dessus. Par exemple, les canapés réalisés à partir d'une tranche de pain tiède sur laquelle on vient déposer une épaisseur de pâté, des fruits ou légumes, des oeufs de poisson, du foie gras mi-cuit, ...

Lorsque l'on désire proposer des sushi ou aliments similaires surgelés, le principal problème réside dans la décongélation, de manière à ce que leur saveur gustative soit la plus proche possible de celles des produits préparés de manière traditionnelle.

En effet, si on se contente de décongeler un sushi ou aliment similaire préparé à l'aide d'un four à micro-ondes, en disposant simplement le sushi ou aliment similaire dans le four d'une part, l'élément principal, à savoir le riz du sushi ou le pain, ainsi décongelé est sec et s'effrite au moment de le saisir et d'autre part, le ou les élément(s) d'accompagnement commence(nt) à se réchauffer fortement, voire même à cuire.

L'art antérieur connaît déjà des dispositifs spécifiques pour la décongélation de sushi.

Il est ainsi proposé, dans la demande de brevet japonais N° 06269253 de réaliser un emballage formé d'un récipient destiné à recevoir un sushi congelé, sur lequel est refermé un couvercle. Le récipient est réalisé à l'aide d'une fine plaque métallique pour réfléchir les micro-ondes, par exemple de l'aluminium, la plaque étant liée à un support en résine synthétique, sauf dans une partie centrale. Le couvercle est fait du même matériau que le récipient, sauf dans une fenêtre elliptique centrale autorisant la transmission des micro-ondes. Les faces latérales du couvercle n'ont pas de feuille métallique. Ainsi, le sushi placé à l'intérieur d'un tel récipient refermé à l'aide d'un tel couvercle est entièrement entouré de matière très fortement réflective de micro-ondes sauf juste au-dessous de lui et au-dessus de lui, où se trouve de la matière plastique, référencée (1) sur le schéma principal, qui laisse passer les micro-ondes.

Il en résulte que la chaleur à l'intérieur de l'emballage augmente très vite et très intensément, ce qui a pour effet de réchauffer le riz, mais également l'élément ou les éléments frais disposé(s) dessus ou à l'intérieur, alors que cet ou ces élément(s) ne devrai(en)t être que juste décongelé(s) et devrai(en)t conserver une température inférieure à 20°C.

La présente invention entend remédier aux inconvénients de l'art antérieur en proposant un emballage qui permette de décongeler efficacement un ou plusieurs sushi ou aliments similaires, c'est-à-dire de réchauffer l'élément principal (riz ou pain) sans réchauffer le ou les élément(s) d'accompagnement.

Pour ce faire, la présente invention est du type décrit ci-dessus et elle est remarquable, dans son acception la plus large, en ce que ladite paroi supérieure comporte au moins un évidement pour le passage dudit sushi ou aliment similaire et ne comporte pas de couche réflective.

Le four à micro-ondes utilisé est bien sûr du type de ceux couramment utilisés dans le domaine alimentaire ; aucun réglage particulier n'est prévu, afin de pouvoir utiliser du matériel standard.

De préférence, au moins une partie desdites parois latérales présentent sur leur surface intérieure une couche réflective de micro-ondes.

Ledit ou lesdits évidements est ou sont de préférence de formes circulaires ou oblongues, afin que chaque sushi ou aliment similaire soit maintenu au niveau de la paroi supérieure du dispositif.

Dans une première variante de réalisation, ledit emballage étant constitué d'un récipient et d'un couvercle, ledit récipient est de préférence constitué d'une feuille de carton sur laquelle est disposée une feuille métallique et en ce que ledit couvercle est constitué d'une feuille de carton ne comportant pas de feuille métallique, des moyens étant prévus pour permettre d'assembler ledit récipient et ledit couvercle.

Dans cette première variante, lesdits moyens sont de préférence constitués par au moins une languette disposée sur ledit récipient ou ledit couvercle, ladite languette étant destinée à coopérer avec une fente ménagée respectivement sur ledit couvercle ou ledit récipient.

Ledit récipient est de préférence constitué d'un flan destiné à être plié et présentant une base de longueur L et de largeur 1, ainsi que deux parois longitudinales présentant une longueur L et une largeur a et deux parois latérales présentant une largeur 1 et une longueur a.

Ledit couvercle est de préférence constitué d'un flan destiné à être plié et présentant une base de longueur L' et de largeur l', ainsi que deux parois longitudinales présentant une longueur L' et une largeur a' et deux parois latérales présentant une largeur l'et une longueur au moins égale à a'.

Lesdites parois latérales présentent de préférence une longueur égale à N x a, N étant un nombre supérieur à 1, afin de former par repli successif desdites parois latérales un renfort.
a est de préférence sensiblement égal à a'.

Dans une deuxième variante de réalisation, l'emballage est constitué d'une feuille de carton unique, formant ledit dispositif selon l'invention, après pliage selon des rainures et collage selon au moins une languette.

Dans cette deuxième variante, les parois longitudinales ou les parois latérales sont, de préférence, constituées chacune de deux parties positionnées respectivement aux extrémités latérales ou longitudinales de la paroi supérieure et du fond, lesdites parties présentant des moyens de liaison pour la formation desdites parois.

Lesdits moyens de liaison sont, de préférence, constitués d'un onglet disposé à l'extrémité d'une partie et d'une lumière disposée dans l'autre partie, afin de permettre de former la paroi correspondante par introduction dudit onglet dans ladite lumière.

La présente invention se rapporte également à un sushi ou aliment similaire congelé ou un plat préparé à base de sushi ou aliment(s) similaire(s) congelé(s), ledit sushi ou aliment similaire étant du type constitué d'un élément principal, destiné à être servi tiède, comme par exemple de riz ou du pain, et d'au moins un élément d'accompagnement destiné à être servi froid, remarquable en ce que ledit ou lesdits sushi ou aliment(s) similaire(s) est ou sont chacun disposé(s) dans un évidement d'un dispositif selon l'invention.

Avantageusement, la présente invention consiste en un dispositif qui permet de disposer un ou plusieurs sushi ou aliment similaire, afin qu'il ou qu'ils soient correctement décongelé(s) et présente(nt) une saveur très proche de la saveur de sushi ou aliments similaires préparés de manière traditionnelle.

L'élément principal (riz ou pain) est juste tiède et le ou les éléments d'accompagnement sont justes décongelés ; ils ont la saveur de produit frais.

Avantageusement, la présente invention consiste en un dispositif dans lequel les sushi ou aliments similaires peuvent être disposés préalablement à la surgélation ou à la congélation, ce dispositif permettant de décongeler directement les sushi ou aliments similaires, afin de leur donner une présentation et une saveur sensiblement identique à celle des sushi ou aliments similaires préparés de manière traditionnelle. Le dispositif forme ainsi un emballage de congélation et décongélation.

Avantageusement, la préparation de sushi ou d'aliments similaires par un utilisateur est très simple : il suffit de sortir le dispositif selon l'invention du congélateur, d'enlever l'emballage supplémentaire éventuel, de glisser le dispositif dans un four à micro-ondes et de mettre en oeuvre ce four le temps adéquat.

En outre, le dispositif est peu onéreux à fabriquer car sa fabrication et son assemblage peuvent être entièrement automatisés.

On comprendra mieux l'invention à l'aide de la description, faite ci-après à titre purement explicatif, d'un mode de réalisation de l'invention, en référence aux figures annexées :
- la figure 1 illustre une vue en perspective d'un dispositif selon l'invention ;
- la figure 2 illustre une vue de face du flan permettant la réalisation du récipient selon la première variante du dispositif selon l'invention ;
- la figure 3 illustre une vue de face du flan permettant la réalisation du couvercle selon la première variante du dispositif selon l'invention ;
- la figure 4 illustre une vue de la face intérieure du flan permettant la réalisation du récipient selon la deuxième variante du dispositif selon l'invention ; et
- la figure 5 illustre une vue de la face extérieure du flan permettant la réalisation du récipient selon la deuxième variante du dispositif selon l'invention.

Un sushi ou aliment similaire au sens de la présente invention est normalement constitué d'un élément principal tel que du riz ou du pain ou une pâte cuite et d'au moins un élément d'accompagnement ou garniture tel que du poisson, de la viande ou un morceau de légume ou de fruit ou une préparation à base de poisson, de viande, de fruit ou de légume.

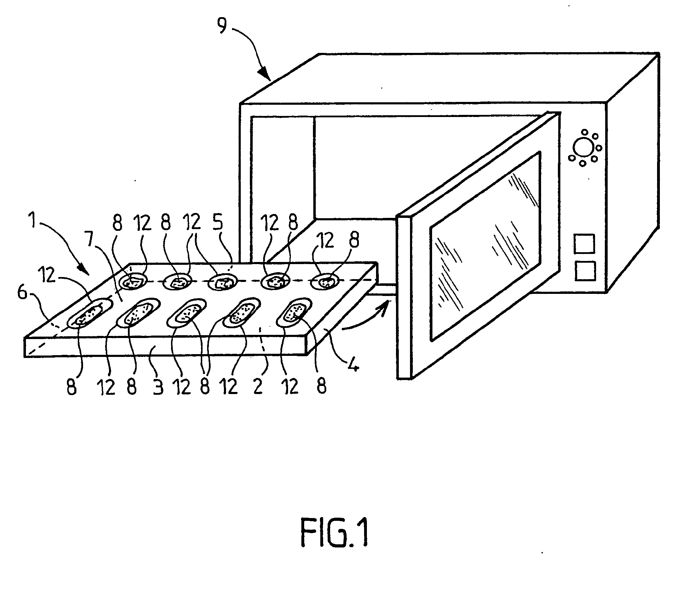

Le dispositif (1) pour la décongélation à l'aide d'un four (9) à micro-ondes d'au moins un sushi (12) ou aliment similaire selon l'invention est illustré figure 1.

Le dispositif (1) se présente sous la forme d'un emballage présentant au moins un fond (2), des parois latérales (3, 4, 5, 6) et une paroi supérieure (7). Le dispositif (1) forme donc une boîte, par exemple à 6 côtés.

Le fond (2) présente sur sa surface intérieure une couche réflective de micro-ondes qui ne se laisse pas traversée par les micro-ondes. Une telle couche est obtenue par fixation d'une feuille métallique sur la surface intérieure du fond (2).

Le dispositif (1) selon l'invention est caractérisé en ce que ladite paroi supérieure (7) est perméable aux micro-ondes, c'est-à-dire qu'elle se laisse traverser par les micro-ondes, et comporte au moins un évidement (8) pour le passage dudit sushi (12) ou aliment similaire.

La paroi supérieure (7) ne comporte ainsi pas de couche réflective de micro-ondes, ni sur sa surface intérieure, ni sur sa surface extérieure.

De préférence, au moins une partie desdites parois latérales (3, 4, 5, 6), voire la totalité des parois latérales (3, 4, 5, 6), présentent sur leur surface intérieure une couche réflective de micro-ondes, afin d'augmenter l'effet obtenu à l'aide du fond (2).

Ainsi, le ou les sushi (12) ou aliment(s) similaire(s) subissent une augmentation de chaleur à leur base, qui est en contact avec le fond (2), grâce à l'accumulation de chaleur réalisée par la matière réflective de micro-onde, mais la partie supérieure du ou des sushi ou aliment(s) similaire(s) ne subit qu'une très faible augmentation de chaleur ; cette partie est juste décongelée. La paroi supérieure (7), qui laisse passer les micro-ondes, agit comme un déflecteur de chaleur, afin de conserver la chaleur juste nécessaire à l'intérieur de l'emballage.

Le dispositif selon l'invention permet ainsi de réaliser une décongélation à deux vitesses pour deux constituants différents selon leur position dans l'emballage ou au-dessus de l'emballage.

L'évidement (8) présente de préférence sensiblement une section d'ouverture sensiblement de même dimension que la section de l'élément principal. Il est important que chaque évidement permette aux micro-ondes d'atteindre le sushi (12) ou aliment similaire dont la partie supérieure est au niveau de l'évidement.

Le dispositif (1) forme ainsi une barquette de présentation qu'il est possible d'agrémenté à l'aide d'éléments de décoration ou d'imprimer.

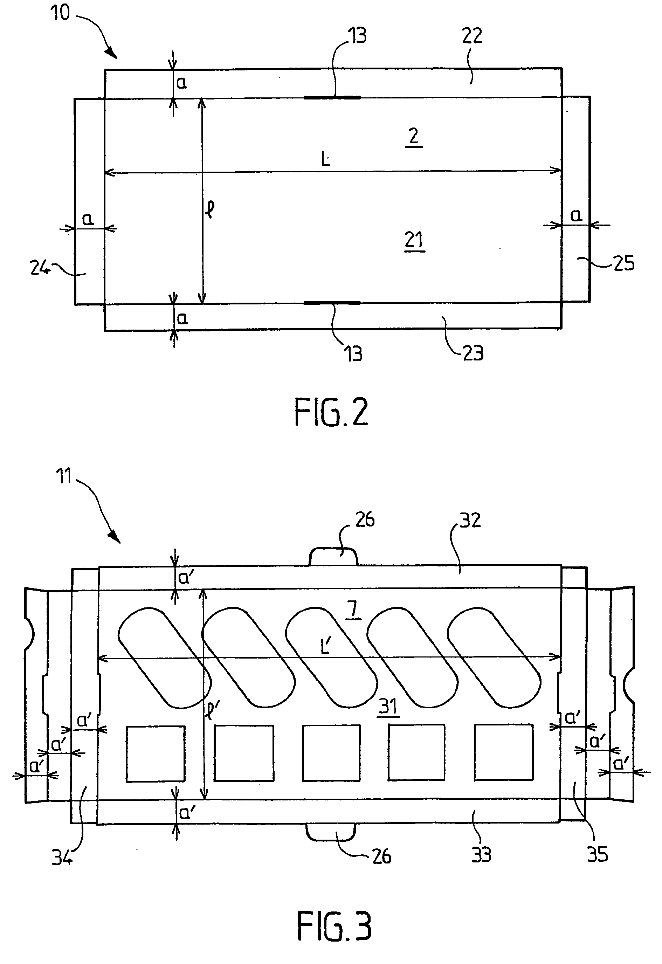

Dans une première variante de réalisation de l'invention, illustrée figures 2 et 3, l'emballage réalisant le dispositif (1) est constitué d'un récipient (10) et d'un couvercle (11).

Le récipient (10), illustré figure 2, est constitué d'une feuille de carton alimentaire sur laquelle est disposée une feuille métallique composée essentiellement, de préférence d'aluminium. Cette feuille métallique est, par exemple, collée sur la face intérieure de la feuille de carton.

Le couvercle (11), illustré figure 3, est constitué d'une feuille de carton alimentaire ne comportant pas de feuille métallique.

Des moyens sont prévus pour permettre d'assembler ledit récipient (10) et ledit couvercle (11).

Les moyens permettant d'assembler ledit récipient (10) et ledit couvercle (11) sont constitués de préférence par au moins une languette (26) disposée sur ledit récipient (10) ou ledit couvercle (11), ladite languette (26) étant destinée à coopérer avec une fente (13) ménagée respectivement sur ledit couvercle (11) ou ledit récipient (10).

Le récipient (10) est constitué d'un flan destiné à être plié et présentant une base (21), formant le fond (2) du dispositif (1), de longueur L égale, par exemple à 236 millimètres et de largeur 1 égale, par exemple à 111 millimètres, ainsi que deux parois longitudinales (22, 23) présentant une longueur L et une largeur a et deux parois latérales (24, 25) présentant une largeur 1 et une longueur a, a étant égal, par exemple à 13 millimètres.

Ainsi, lorsque les parois latérales (22, 23, 24, 25) sont pliées, selon des rainures (27), sensiblement à 90° par rapport au plan formé par la base (21), on obtient un récipient (10).

Le couvercle (11) est constitué d'un flan destiné à être plié et présentant une base (31), formant la paroi supérieure (7) du dispositif (1), de longueur L', légèrement supérieure à L et égale, par exemple à 240 millimètres et de largeur 1', légèrement supérieure à 1 et égale, par exemple à 115 millimètres.

Le flan présente en outre deux parois longitudinales (32, 33) présentant une longueur L' et une largeur a' et deux parois latérales (34, 35) présentant une largeur l' et une longueur au moins égale à a'.

Ainsi, lorsque les parois latérales (32, 33, 34, 35) sont pliées, selon des rainures (37), sensiblement à 90° par rapport au plan formé par la base (31), on obtient un couvercle (11).

Les parois latérales (34, 35) présentent une longueur égale à N x a, N étant un nombre supérieur à 1, afin de former par repli successif desdites parois latérales (34, 35) un renfort.

Dans la version illustrée figure 3, N = 3 ; toutefois, il peut être utile d'opérer une diminution de la valeur de a correspondant sensiblement à l'épaisseur du carton (par exemple 1 millimètre), au-delà de N = 2.
a est de préférence sensiblement égal à a', afin de permettre de réaliser une boîte présentant une rigidité suffisante et faciliter la manutention du dispositif (1).

La face extérieure du couvercle (11) peut être imprimée d'une publicité et/ou de conseils d'utilisation.

Aucune colle n'est ainsi nécessaire au montage respectivement du récipient (10) et du couvercle (11), ni à l'assemblage du récipient (10) et du couvercle (11) pour la réalisation du dispositif (1) selon la première variante.

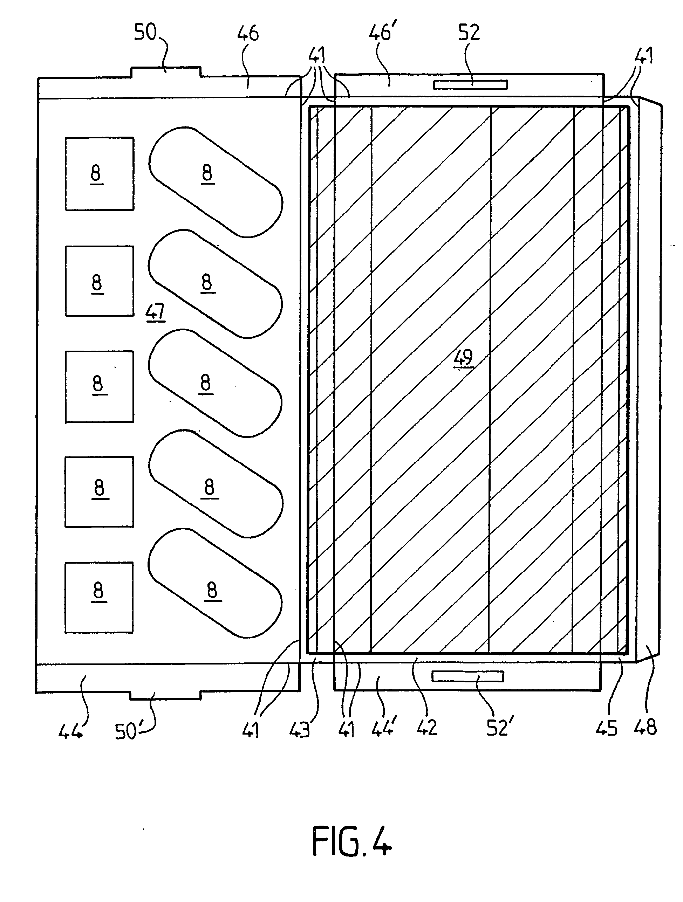

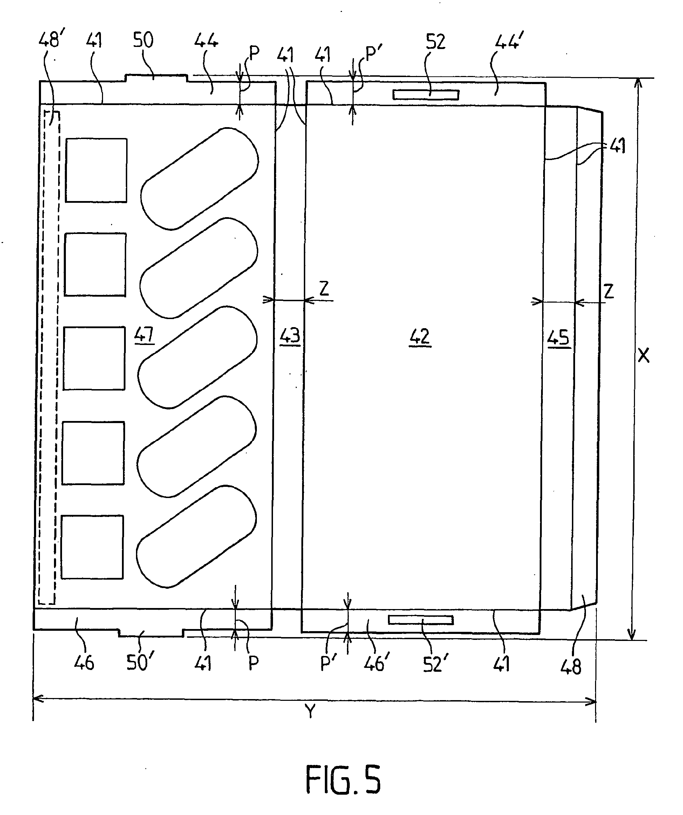

Dans une deuxième variante de réalisation de l'invention, illustrée figures 4 et 5, l'emballage réalisant le dispositif (1) est constitué d'une feuille de carton unique formant ledit dispositif (1) après pliage selon des rainures (41) et collage selon au moins une languette (48) sur une zone de collage (48').

Dans l'exemple illustré, la languette (48) est située à l'extrémité libre d'une paroi latérale (45) et la zone de collage (48') est située sur la face intérieure d'une paroi supérieure (47).

Le flan en carton destiné à être plié et collé, afin de permettre de former le dispositif (1) présente une base (42), formant le fond (2) du dispositif (1), une paroi supérieure (47), formant la paroi supérieure (7) du dispositif (1), ainsi que des parois longitudinales (43, 45) formant les parois longitudinales (3, 5) du dispositif (1) et des parties de parois latérales (44, 44', 46, 46') formant les parois latérales (4, 6) du dispositif (1).

La couche réflective de micro-onde est constituée d'une feuille métallique (49), par exemple en aluminium, collée sur la face intérieure de la base (42), et débordant sur les parois longitudinales (43, 45), comme on peut le voir sur la figure 4.

Les parois latérales (4, 6) du dispositif (1) sont constituées chacune de deux parties de parois latérales (44, 44') et respectivement (46, 46'), situées respectivement aux extrémités longitudinales de la paroi supérieure (47) et de la base (42).

Lesdites parties de parois latérales (44, 44', 46, 46') présentent des moyens de liaison pour la formation desdites parois latérales (4, 6).

Ces moyens de liaison sont constitués chacun d'un onglet (50, 50') disposé à l'extrémité longitudinale de chaque partie de paroi latérale (44, 46) et d'une lumière (52, 52') disposée respectivement dans chaque partie de paroi latérale (44', 46').

L'introduction d'un onglet (50, 50') d'une partie de paroi latérale (44, 46) dans une lumière (52, 52') d'une partie de paroi latérale (44', 46') permet de former respectivement les parois latérales (4, 6) du dispositif (1).

Il pourrait également être imaginé que la languette (48) soit positionnée à une extrémité longitudinale d'une paroi latérale et que les onglets et les lumières soient disposés sur les parois longitudinales (3, 5).

Le flan en carton, illustré figure 5, présente une longueur hors tout X égale, par exemple à 267 millimètres et une largeur hors tout Y égale, par exemple à 276 millimètres, et le dispositif (1) présente une épaisseur Z, par exemple de 15 millimètres, une fois formé. Cette épaisseur correspond à la largeur des parois longitudinales (43, 45).

La largeur de la base (42) est d'environ 115 millimètres et celle de la paroi supérieure (47) est légèrement inférieure et d'environ 114 millimètres. La largeur de la languette (48) est d'environ 12 millimètres. La longueur de la languette (48) est égale à la longueur de la paroi supérieure (47) et de la base (42).

La feuille métallique (49) présente une longueur d'environ 235 millimètres et une largeur d'environ 140 millimètres.

Les deux parois latérales (44, 46) présentent une longueur P d'environ 10 millimètres et les deux parois latérales (44', 46') présentent une longueur P', légèrement supérieure à P, d'environ 12 millimètres.

Les ergots (50, 50') présentent une longueur d'environ 3 millimètres et les lumières (52, 52') présentent une longueur légèrement supérieure, d'environ 4 millimètres. De même, la largeur des ergots (50, 50') est légèrement inférieure à celles de lumières (52, 52'). Les lumières (52, 52') se trouvent à environ 4 millimètres du bord latéral des parties de parois latérales (44', 46') et à environ 4 millimètres des rainures (41) séparant les parties de parois latérales (44', 46') du fond (42).

Ainsi, lorsque les parties de parois latérales (43, 44, 44', 45, 46, 46') sont pliées, selon les rainures (41), sensiblement à 90° par rapport au plan formé par la base (42), que la languette (48) est collée sur la zone de collage (48') et que les ergots (50), sont introduits dans les lumières (52), on obtient un emballage formant un dispositif (1), selon la deuxième variante de réalisation de l'invention.

Dans les deux variantes de réalisation de l'invention ledit ou lesdits évidements (8) sont de formes circulaires ou oblongues, afin que chaque sushi soit maintenu, au niveau de sa partie supérieure contre la paroi supérieure (7) du récipient (1). Les évidements oblongs sont plus particulièrement destinés aux sushi du type « Nigiri » et les évidements circulaires sont plus particulièrement destinés aux sushi du type « Maki » dont l'axe est alors disposé perpendiculairement au fond (2).

La souplesse du matériau utilisé permet de saisir facilement des sushi ou autres aliments ainsi décongelés.

Dans les deux variantes de réalisation de l'invention, le dispositif (1) peut être recouvert, une fois les sushi ou aliments similaires correctement positionnés dans les évidements, d'un ou plusieurs emballages supplémentaires ou étui constitué chacun par exemple par une feuille de matière plastique ou un emballage supplémentaire en carton qu'il conviendra d'ôter avant la décongélation au four à micro-ondes.

Pour l'utilisateur, il est alors simple d'enlever cet ou ces emballages supplémentaires avant de glisser le dispositif dans un four à micro-ondes et de positionner le fond du dispositif sur le plateau du four micro-ondes. A tire d'exemple, il suffit d'une minute à 900 Watts pour préparer un plat de sushi (12) disposés dans un dispositif selon l'invention.

La présente invention se rapporte également aux sushi (12) ou aliments similaires congelés et aux plats préparés à base de sushi (12) ou aliments similaires congelés, lorsque lesdits sushi (12) ou aliments similaires sont disposés chacun dans un évidement (8) d'un dispositif (1) selon l'invention.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif (1) pour la décongélation à l'aide d'un four (9) à micro-ondes d'au moins un sushi (12) ou aliment similaire, du type constitué d'un élément principal, destiné à être servi tiède, comme par exemple de riz ou du pain, et d'au moins un élément d'accompagnement destiné à être servi froid, ledit dispositif (1) se présentant sous la forme d'un emballage présentant au moins un fond (2), des parois latérales (3, 4, 5, 6) et une paroi supérieure (7), ledit fond (2) présentant sur sa surface intérieure une couche réflective de micro-ondes, **caractérisé en ce que** ladite paroi supérieure (7) est perméable aux micro-ondes et comporte au moins un évidement (8) pour le passage dudit sushi (12) ou aliment similaire.

2. Dispositif (1) pour la décongélation à l'aide d'un four (9) à micro-ondes d'au moins un sushi (12) ou aliment similaire selon la revendication 1, **caractérisé en ce qu'**au moins une partie desdites parois latérales (3, 4, 5, 6) présentent sur leur surface intérieure une couche réflective de micro-ondes.

3. Dispositif (1) pour la décongélation à l'aide d'un four (9) à micro-ondes d'au moins un sushi (12) ou aliment similaire selon la revendication 1 ou la revendication 2, ledit ou lesdits évidements (8) sont de formes circulaires ou oblongues, afin que chaque sushi (12) ou aliment similaire soit maintenu au niveau de la paroi supérieure (7) du dispositif (1).

4. Dispositif (1) pour la décongélation à l'aide d'un four (9) à micro-ondes d'au moins un sushi (12) ou aliment similaire selon l'une quelconque des revendications 1 à 3, ledit emballage étant constitué d'un récipient (10) et d'un couvercle (11), **caractérisé en ce que** ledit récipient (10) est constitué d'une feuille de carton sur laquelle est disposée une feuille métallique et **en ce que** ledit couvercle (11) est constitué d'une feuille de carton ne comportant pas de feuille métallique, des moyens étant prévus pour permettre d'assembler ledit récipient (10) et ledit couvercle (11).

5. Dispositif (1) pour la décongélation à l'aide d'un four (9) à micro-ondes d'au moins un sushi (12) ou aliment similaire selon la revendication 4, **caractérisé en ce que** lesdits moyens sont constitués par au moins une languette (26) disposée sur ledit récipient (10) ou ledit couvercle (11), ladite languette (26) étant destinée à coopérer avec une fente (13) ménagée respectivement sur ledit couvercle (11) ou ledit récipient (10).

6. Dispositif (1) pour la décongélation à l'aide d'un four (9) à micro-ondes d'au moins un sushi (12) ou aliment similaire selon la revendication 4 ou la revendication 5, **caractérisé en ce que** ledit récipient (10) est constitué d'un flan destiné à être plié et présentant une base (21) de longueur L et de largeur 1, ainsi que deux parois longitudinales (22, 23) présentant une longueur L et une largeur a et deux parois latérales (24, 25) présentant une largeur 1 et une longueur a.

7. Dispositif (1) pour la décongélation à l'aide d'un four (9) à micro-ondes d'au moins un sushi (12) ou aliment similaire selon l'une quelconque des revendications 4 à 6, **caractérisé en ce que** ledit couvercle (11) est constitué d'un flan destiné à être plié et présentant une base (31) de longueur L' et de largeur 1', ainsi que deux parois longitudinales (32, 33) présentant une longueur L' et une largeur a' et deux parois latérales (34, 35) présentant une largeur l'et une longueur au moins égale à a'.

8. Dispositif (1) pour la décongélation à l'aide d'un four (9) à micro-ondes d'au moins un sushi (12) ou aliment similaire selon la revendication 7, **caractérisé en ce que** lesdites parois latérales (34, 35) présentant une longueur égale à N x a, N étant un nombre supérieur à 1, afin de former par repli successif desdites parois latérales (34, 35) un renfort.

9. Dispositif (1) pour la décongélation à l'aide d'un four (9) à micro-ondes d'au moins un sushi (12) ou aliment similaire selon l'une quelconque des revendications 7 ou 8, **caractérisé en ce que** a est sensiblement égal à a'.

10. Dispositif (1) pour la décongélation à l'aide d'un four (9) à micro-ondes d'au moins un sushi (12) ou aliment similaire selon l'une quelconque des revendications 1 à 3, **caractérisé en ce que** ledit emballage est constitué d'une feuille de carton unique, formant ledit dispositif (1) après pliage selon des rainures (41) et collage selon au moins une languette (48).

11. Dispositif (1) pour la décongélation à l'aide d'un four (9) à micro-ondes d'au moins un sushi (12) ou aliment similaire selon la revendication 10, **caractérisé en ce que** les parois longitudinales (3, 5) ou les parois latérales (4, 6) sont constituées chacune de deux parties positionnées respectivement aux extrémités latérales ou longitudinales de la paroi supérieure (7) et du fond (2), lesdites parties présentant des moyens de liaison pour la formation desdites parois.

12. Dispositif (1) pour la décongélation à l'aide d'un four (9) à micro-ondes d'au moins un sushi (12) ou aliment similaire selon la revendication 11, **caractérisé en ce que** lesdits moyens de liaison sont constitués d'un onglet (50) disposé à l'extrémité d'une partie et d'une lumière (52) disposée dans l'autre partie, afin de permettre de former la paroi correspondante par introduction dudit onglet (50) dans ladite lumière (52).

13. Ensemble d'un dispositif selon l'une quelconque des revendications 1 à 12 et un sushi (12) ou aliment similaire congelé ou plat préparé à base de sushi (12) ou aliment(s) similaire(s) congelé(s), ledit sushi (12) ou aliment similaire étant du type constitué d'un élément principal, destiné à être servi tiède, comme par exemple de riz ou du pain, et d'au moins un élément d'accompagnement destiné à être servi froid, **caractérisé en ce que** ledit ou lesdits sushi (12) ou aliment similaire est ou sont chacun disposé(s) dans un évidement (8) dudit dispositif (1).

## Claims

1. Device (1) for defrosting at least one piece of sushi (12) or a similar food product using a microwave oven (9), of the type consisting of a main element, intended to be served warm, such as rice or bread, for example, and at least one accompanying element intended to be served cold, said device (1) being presented in the form of a packaging with at least one bottom (2), lateral walls (3, 4, 5, 6) and a top wall (7), said bottom having on its inner surface a microwave-reflecting layer, **characterised in that** said top wall (7) is permeable to microwaves and comprises at least one recess (8) to accommodate said sushi (12) or similar food product.

2. Device (1) for defrosting at least one piece of sushi (12) or a similar food product using a microwave oven (9) according to claim 1, **characterised in that** at least a part of said lateral walls (3, 4, 5, 6) is covered on its inner surface with a microwave-reflecting layer.

3. Device (1) for defrosting at least one piece of sushi (12) or a similar food product using a microwave oven (9) according to claim 1 or claim 2, **characterised in that** said recess or recesses (8) are circular or oblong in shape, so that each piece of sushi (12) or similar food product is held at the height of the top wall (7) of the device (1).

4. Device (1) for defrosting at least one piece of sushi (12) or a similar food product using a microwave oven (9) according to any one of the claims from 1 to 3, said packaging consisting of a container (10) and a lid (11), **characterised in that** said container (10) consists of a sheet of cardboard on which a sheet of foil is placed and **in that** said lid (11) consists of a sheet of cardboard that does not comprise a sheet of foil, means being provided to enable the assembly of said container (10) and said lid (11) .

5. Device (1) for defrosting at least one piece of sushi (12) or a similar food product using a microwave oven (9) according to claim 4, **characterised in that** said means consist of at least one flap (26) added to said container (10) or said lid (11), said flap being designed such as to cooperate with a slot (13) made respectively in said lid (11) or said container (10).

6. Device (1) for defrosting at least one piece of sushi (12) or a similar food product using a microwave oven (9) according to claim 4 or claim 5, **characterised in that** said container (10) consists of a blank intended to be folded, having a base (21) with a length L and a width 1, as well as two longitudinal walls (22, 23) with a length L and a width a and two lateral walls (24, 25) with a width 1 and a length a.

7. Device (1) for defrosting at least one piece of sushi (12) or a similar food product using a microwave oven (9) according to any one of the claims from 4 to 6, **characterised in that** said lid (11) consists of a blank intended to be folded, having a base (31) with a length L' and a width 1', as well as two longitudinal walls (32, 33) with a length L' and a width a' and two lateral walls (34, 35) with a width 1' and a length at least equal to a'.

8. Device (1) for defrosting at least one piece of sushi (12) or a similar food product using a microwave oven (9) according to claim 7, **characterised in that** said lateral walls (34, 35) have a length equal to N x a, N being a number larger than 1, in order to form a reinforcement by successive folding of said lateral walls (34, 35).

9. Device (1) for defrosting at least one piece of sushi (12) or a similar food product using a microwave oven (9) according to either one of the claims 7 or 8, **characterised in that** a is substantially equal to a'.

10. Device (1) for defrosting at least one piece of sushi (12) or a similar food product using a microwave oven (9) according to any one of the claims from 1 to 3, **characterised in that** said packaging consists of a single sheet of cardboard, forming said device (1) by means of folding along the grooves (41) and gluing along at least one flap (48).

11. Device (1) for defrosting at least one piece of sushi (12) or a similar food product using a microwave oven (9) according to claim 10, **characterised in that** the longitudinal walls (3, 5) or the lateral walls (4, 6) each consist of two parts positioned respectively at the lateral or longitudinal ends of the top wall (7) and of the bottom (2), said parts having connecting means for the formation of said walls.

12. Device (1) for defrosting at least one piece of sushi (12) or a similar food product using a microwave oven (9) according to claim 11, **characterised in that** said connecting means consist of a tab (50) made at the end of one part and an opening (52) made in the other part, such as to make it possible to form the corresponding wall by means of inserting said tab (50) in said opening (52).

13. Assembly of a device according to any one of the claims from 1 to 12 and a piece of sushi (12) or a similar frozen food product or a pre-cooked dish based on sushi (12) or similar food products, said sushi (12) or similar food product being of the type that consists of a main element, intended to be served warm, such as rice or bread, for example, and at least one accompanying element intended to be served cold, **characterised in that** said sushi (12) or similar food product is placed in a recess (8) of said device (1).

## Patentansprüche

1. Vorrichtung (1) zum Auftauen mit Hilfe eines Mikrowellenherdes (9) von mindestens einem Sushi (12) oder einem ähnlichen Nahrungsmittel von der Art, das aus einem Hauptelement gebildet wird, das warm serviert werden soll, wie zum Beispiel Reis oder Brot, und aus mindestens einem begleitenden Teil, der kalt serviert werden soll, wobei die besagte Vorrichtung (1) die Form einer Verpackung hat, die mindestens einen Boden (2), Seitenwände (3, 4, 5, 6) und eine obere Wand (7) aufweist, wobei der besagte Boden (2) auf seiner inneren Oberfläche eine die Mikrowellen reflektierende Schicht aufweist, **dadurch gekennzeichnet, daß** die besagte obere Wand (7) für Mikrowellen durchlässig ist und mindestens eine Aussparung (8) für den Durchgang des Sushis (12) oder des ähnlichen Nahrungsmittels umfaßt.

2. Vorrichtung (1) zum Auftauen mit Hilfe eines Mikrowellenherdes (9) von mindestens einem Sushi (12) oder einem ähnlichen Nahrungsmittel nach Anspruch 1, **dadurch gekennzeichnet, daß** mindestens ein Teil der besagten Seitenwände (3, 4, 5, 6) auf ihrer inneren Oberfläche eine die Mikrowellen reflektierende Schicht aufweisen.

3. Vorrichtung (1) zum Auftauen mit Hilfe eines Mikrowellenherdes (9) von mindestens einem Sushi (12) oder einem ähnlichen Nahrungsmittel nach Anspruch 1 oder nach Anspruch 2, wobei die besagte(n) Aussparung(en) (8) runde oder längliche Formen haben, damit jedes Sushi (12) oder ähnliche Nahrungsmittel an der oberen Wand (7) der Vorrichtung (1) gehalten wird.

4. Vorrichtung (1) zum Auftauen mit Hilfe eines Mikrowellenherdes (9) von mindestens einem Sushi (12) oder einem ähnlichen Nahrungsmittel nach einem beliebigen der Ansprüche 1 bis 3, wobei die besagte Verpackung aus einem Behälter (10) und einem Deckel (11) gebildet wird, **dadurch gekennzeichnet, daß** der besagte Behälter (10) aus einem Kartonblatt gebildet wird, auf dem eine Metallfolie angeordnet ist, und daß der besagte Deckel (11) aus einem Kartonblatt gebildet wird, das keine Metallfolie aufweist, wobei Mittel vorgesehen sind, mit denen der besagte Behälter (10) und der besagte Deckel (11) zusammengefügt werden können.

5. Vorrichtung (1) zum Auftauen mit Hilfe eines Mikrowellenherdes (9) von mindestens einem Sushi (12) oder einem ähnlichen Nahrungsmittel nach Anspruch 4, **dadurch gekennzeichnet, daß** die besagten Mittel aus mindestens einer Lasche (26) gebildet werden, die auf dem besagten Behälter (10) oder dem besagten Deckel (11) angebracht ist, wobei die besagte Lasche (26) dazu bestimmt ist, mit einem Schlitz (13) zusammenzuwirken, der auf dem besagten Deckel (11) beziehungsweise dem besagten Behälter (10) ausgebildet ist.

6. Vorrichtung (1) zum Auftauen mit Hilfe eines Mikrowellenherdes (9) von mindestens einem Sushi (12) oder einem ähnlichen Nahrungsmittel nach Anspruch 4 oder Anspruch 5, **dadurch gekennzeichnet, daß** der besagte Behälter (10) aus einem Zuschnitt gebildet wird, der gefaltet werden soll, und der eine Basis (21) mit der Länge L und der Breite 1 aufweist, sowie zwei Längswände (22, 23), die eine Länge L und eine Breite a aufweisen, und zwei Seitenwände (24, 25), die eine Breite 1 und eine Länge a aufweisen.

7. Vorrichtung (1) zum Auftauen mit Hilfe eines Mikrowellenherdes (9) von mindestens einem Sushi (12) oder einem ähnlichen Nahrungsmittel nach einem beliebigen der Ansprüche 4 bis 6, **dadurch gekennzeichnet, daß** der besagte Deckel (11) aus einem Zuschnitt gebildet wird, der gefaltet werden soll, und der eine Basis (31) mit der Länge L' und der Breite 1' aufweist, sowie zwei Längswände (32, 33), die eine Länge L' und eine Breite a' aufweisen, und zwei Seitenwände (34, 35), die eine Breite l' und eine Länge von mindestens gleich a' aufweisen.

8. Vorrichtung (1) zum Auftauen mit Hilfe eines Mikrowellenherdes (9) von mindestens einem Sushi (12) oder einem ähnlichen Nahrungsmittel nach Anspruch 7, **dadurch gekennzeichnet, daß** die besagten Seitenwände (34, 35) eine Länge gleich N x a aufweisen, wobei N eine Zahl höher als 1 ist, um durch aufeinanderfolgendes Falten de besagten Seitenwände (34, 35) eine Verstärkung zu bilden.

9. Vorrichtung (1) zum Auftauen mit Hilfe eines Mikrowellenherdes (9) von mindestens einem Sushi (12) oder einem ähnlichen Nahrungsmittel nach einem beliebigen der Ansprüche 7 oder 8, **dadurch gekennzeichnet, daß** a etwa gleich a' ist.

10. Vorrichtung (1) zum Auftauen mit Hilfe eines Mikrowellenherdes (9) von mindestens einem Sushi (12) oder einem ähnlichen Nahrungsmittel nach einem beliebigen der Ansprüche 1 bis 3, **dadurch gekennzeichnet, daß** die besagte Verpackung aus einem einzigen Kartonblatt gebildet wird, das nach Faltung den Riefen (41) entlang und Klebung nach mindestens einer Lasche (48) die besagte Vorrichtung (1) bildet.

11. Vorrichtung (1) zum Auftauen mit Hilfe eines Mikrowellenherdes (9) von mindestens einem Sushi (12) oder einem ähnlichen Nahrungsmittel nach Anspruch 10, **dadurch gekennzeichnet, daß** die Längswände (3, 5) oder die Seitenwände (4, 6) jeweils aus zwei Teilen gebildet werden, die an den seitlichen beziehungsweise länglichen Enden der oberen Wand (7) und des Bodens (2) befestigt sind, wobei die besagten Teile Verbindungsmittel zur Bildung der besagten Wände aufweisen.

12. Vorrichtung (1) zum Auftauen mit Hilfe eines Mikrowellenherdes (9) von mindestens einem Sushi (12) oder einem ähnlichen Nahrungsmittel nach Anspruch 11, **dadurch gekennzeichnet, daß** die besagten Verbindungsmittel aus einer Zunge (50) gebildet werden, die am Ende eines Teils angeordnet ist, und aus einer Öffnung (52), die im anderen Teil angeordnet ist, damit die entsprechende wand durch Einführen der besagten Zunge (50) in die besagte Öffnung (52) gebildet werden kann.

13. Ensemble einer Vorrichtung nach einem beliebigen der Ansprüche 1 bis 12, und ein Sushi oder ähnliches eingefrorenes Nahrungsmittel oder Fertiggericht auf Sushi-Basis (12) oder ähnliche(s) eingefrorene(s) Nahrungsmittel, von der Art, das aus einem Hauptelement gebildet wird, das warm serviert werden soll, wie zum Beispiel Reis oder Brot, und aus mindestens einem begleitenden Teil, der kalt serviert werden soll, **dadurch gekennzeichnet, daß** das/die besagte(n) Sushi(s) oder ähnliches Nahrungsmittel jeweils in einer Aussparung (8) der besagten Vorrichtung (1) angeordnet ist/sind.
